# EUROPEAN PATENT APPLICATION

(11) **EP 4 116 312 A1**
(43) Date of publication of application: **11.01.2023**
(21) Application number: 21382622.5
(22) Date of filing: 08.07.2021
(51) Int. Cl.: C07F 15/00, B01J 31/16, C08G 77/04, C08L 83/04

(54) **PLATINUM HYDROSILYLATION CATALYST**

(71) Applicant: Venair Iberica, S.A., 08226 Terrassa (ES); Institut Químic de Sarrià CETS Fundació Privada, 08017 Barcelona (ES)
(72) Inventor: BORROS GOMEZ, Salvador, 08173 Sant Cugat del Vallès (ES); AGULLO CHALER, Núria, 08197 VALLDOREIX (ES); DEL PINO LOPEZ, Anna, 08029 BARCELONA (ES); SANCHEZ GARCIA, David, 08033 BARCELONA (ES); FERRER SERRANO, Norma, 08320 EL MASNOU (ES)
(74) Representative: Sugrañes, S.L.P.

(57) **Abstract**

The present invention relates to a platinum hydrosilylation catalyst, which is a complex of platinum, Pt (0), with a diallyl sulphide ligand, which is advantageous as hydrosilylation catalyst for curing silicones. It refers also to a process for the preparation of said complex, to its use for catalysing hydrosilylation reactions, to a silicone composition comprising said complex, to a process for curing said silicone composition, and to a silicone rubber obtainable by said process.

## Description

### Technical field

The present invention relates to a new platinum complex, which is suitable as hydrosilylation catalyst. The new catalyst contains a diallyl sulphide ligand and is advantageous as hydrosilylation catalyst for curing silicones compared to other platinum catalyst know in the art.

### Technical background

As is well-known in the art, the hydrosilylation reaction describes the addition of silicon hydrides across multiple bonds, in particular, C-C multiple bonds. Hydrosilylation is a reaction widely used in the silicones industry for the preparation of monomers, containing silicon-carbon bonds, and for cross-linking silicones (addition curing), namely, by cross-linking between polymethylhydrosiloxane and polymethylvinylsiloxane oils, resulting a variety of products, as oils, rubbers or resins, for multiple applications.

The hydrosilylation reaction typically requires the use of a transition metal catalyst, for example, platinum catalysts. Karstedt's catalyst is a well-known platinum hydrosilylation catalyst, which is a Pt (0) complex containing vinylsiloxane ligands, namely, 1,3-divinyl-1,1,3,3-tetramethyldisiloxane. The formula of Karstedt's catalyst is Pt₂[Me₂SiCH=CH₂)₂O]₃, also commonly abbreviated as Pt₂(dvtms)₃, whose structure can be represented as shown in the following figure:

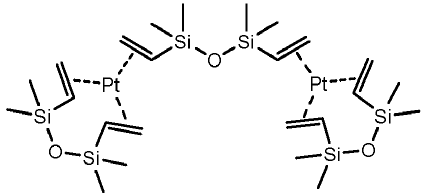

However, in spite of the wide use of Karstedt's catalyst in hydrosilylation reactions, some unsolved drawbacks remain associated to the use of this catalyst.

For example, often it is necessary to add inhibitors of the catalyst, which may act themselves as ligands of Pt, to reduce or reversibly inhibit the low-temperature activity of the platinum catalyst, in order to adjust the pot life of the reaction mixtures, to obtain storable silicone compositions which are stable at room temperature but rapidly cure at higher temperatures.

Moreover, higher selectivity of the catalyst is sometimes desirable to avoid side reactions which often accompany to hydrosilylation, such as dehydrogenative silylation, hydrogenation, isomerization or oligomerization of olefins, for example.

Some parameters of the hydrosilylation catalyst, such as activity (measured by the turnover frequency (TOF)) and stability (measured by turnover number (TON)) may also be improved. In particular, TON of Karstedt's catalyst is limited due to precipitation of platinum colloids caused by reductive deactivation of the catalytic system. This deactivation may be due to the fact that 1,3-divinyl-1,1,3,3-tetramethyldisiloxane ligand is too labile and dissociates rapidly.

The formed Pt metal colloids are not only less active than the Karstedt's catalyst, but they are also less selective, as they promote olefin hydrogenation side reaction. Moreover, at high loads, those metal colloids may also cause undesired yellowish colorations of the silicone rubber product.

Therefore, other platinum complexes useful as hydrosilylation catalysts have been reported in the prior art. For example, many Pt (0) complexes derivatives of the Karstedt's catalyst, comprising phosphine ligands, quinone or N-heterocyclic carbenes have been disclosed, as well as many other Pt (0) and Pt (II) complexes with different ligands, for example, with fullerene, norbornene, maleate, fumarate, imines, diimines, carbenes, diphenylacetylene, among many others (see, for example, Hydrosilylation. A comprehensive Review on Recent Advances, J. Matisons and B. Marciniec Eds., Springer, 2009, pgs. 8-12).

However, the new catalysts proposed in the art are not completely satisfactory either, as, in general, their synthetic processes are cumbersome, or they involve the use of expensive ligands, which make them economically disadvantageous. Moreover, some of the new ligands, such as the *N*-heterocyclic carbene, while are strong and increase catalyst stability, may lead to reduced activity. On the other hand, phosphine ligands are poor in terms of reaction selectivity.

Therefore, there is the need to develop new platinum complexes comprising new ligands which are able to stabilize the catalyst, but labile enough to not impair the catalyst activity. Furthermore, it would be desirable that the new catalyst can improve the pot-life of the silicone compositions without the need to use high loads of inhibitor substances.

### Object of the invention

The object of the present invention is a complex of platinum.

Another aspect of the invention is a process for the preparation of said complex.

Another aspect of the invention is the use of said complex for catalysing hydrosilylation reactions.

Another aspect of the invention is a silicone composition comprising the complex of the invention.

Another aspect of the invention is a process for curing said silicone composition.

Another aspect of the invention is silicone rubber obtainable by said process.

### Description of the drawings

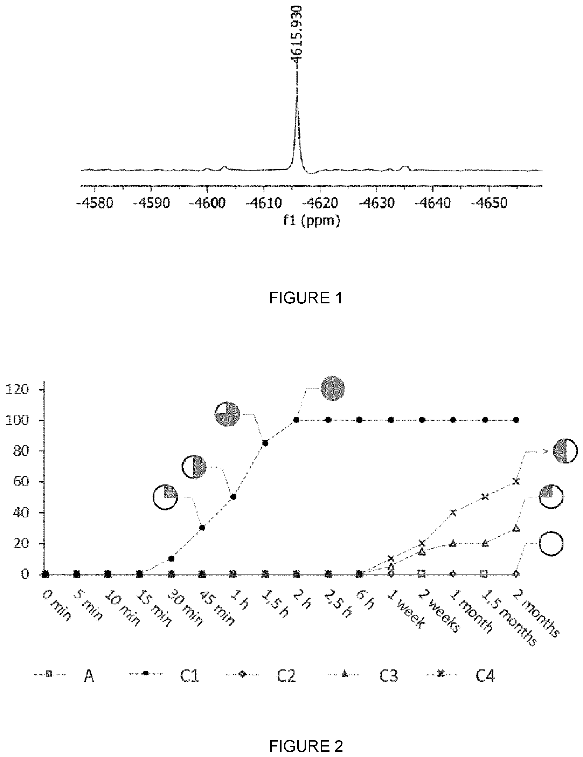

Figure 1 shows the ¹H-decoupled ¹⁹⁵Pt NMR spectrum the complex of the invention recorded in CDCl₃.
Figure 2 is a graph showing in the ordinates the changes in the colour in the APHA-HAZEN scale of a silicone sample comprising the complex of the invention (A), compared with samples of comparative silicones (C1, C2, C3 and C4), as disclosed in Example 2, as a function of time (in the abscissa).

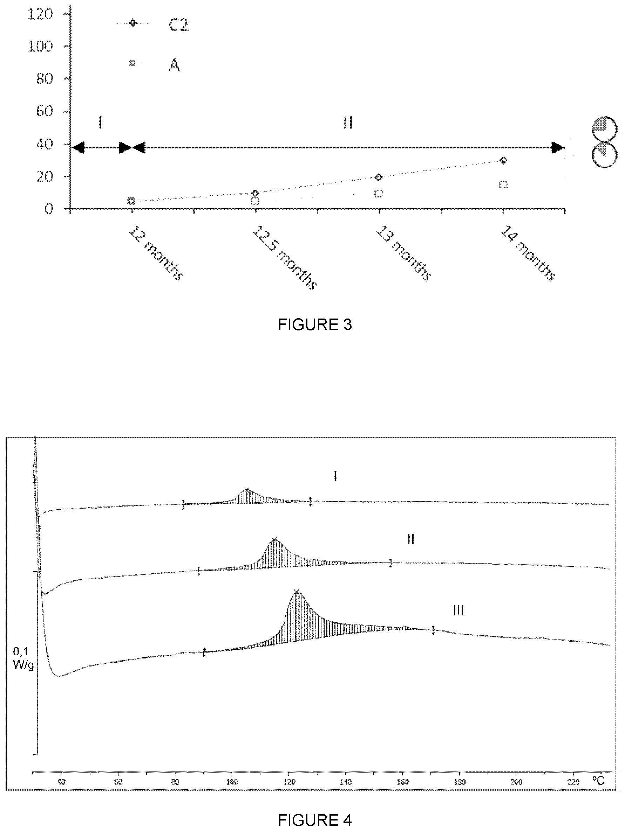

Figure 3 is a graph showing in the ordinates the changes in the colour in the APHA-HAZEN scale of a silicone sample comprising the complex of the invention (A), compared with a sample of a comparative silicone (C2), as disclosed in Example 2, as a function of time (in the abscissa). The silicone samples were stored at 8 °C during the first 12 months (period I) and at room temperature during the last two months (period II).

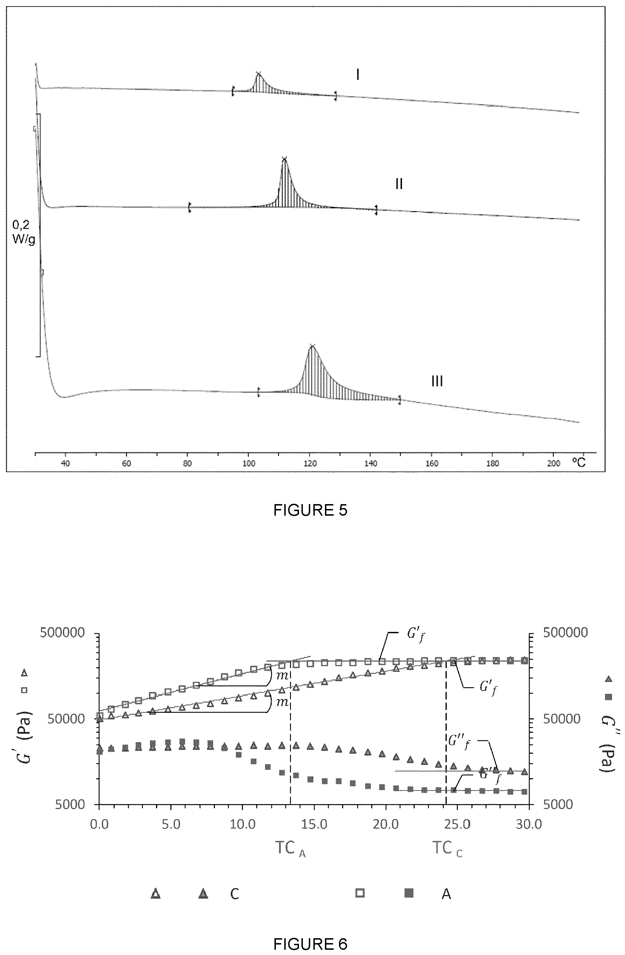

Figure 4 and Figure 5 show the DSC curing thermograms of the control silicon and of the silicon of the invention, respectively, at a heating rate of 2 °C min⁻¹ (I), 5 °C min⁻¹ (II) and 10 °C min⁻¹ (III), as disclosed in Example 3. The abscissa shows the temperatures and the ordinate show the heat flow per unit of mass (W/g). The control silicone showed exotherms at about 105 °C, 115 °C and 123 °C and the silicone of the invention showed exotherms at about 103 °C, 112 °C and 121 °C.
Figure 6 shows the values of G' (storage modulus) and G" (loss modulus) in Pa, vs. time (in minutes) during the curing process of control silicone and the silicone of the invention, as disclosed in Example 4. TC is the time at which G' reaches the 90% of its maximum value.

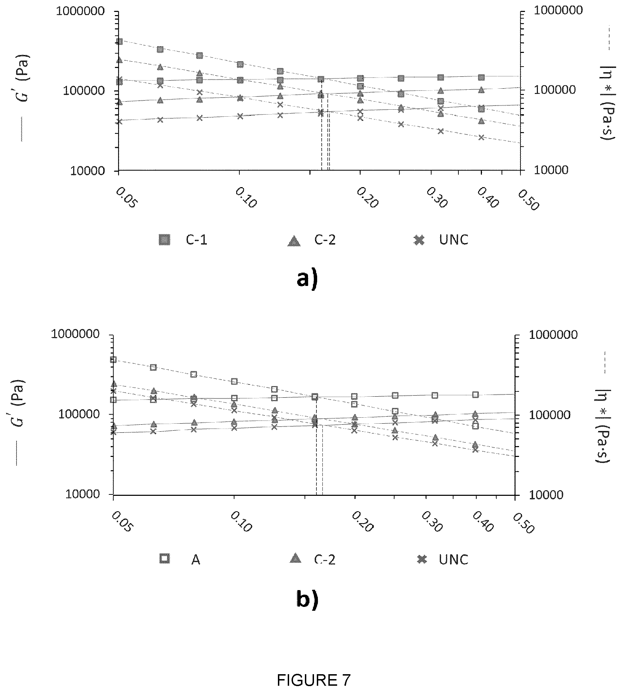

Figures 7 a) and -b) show the changes of the complex viscosity (|η*|, in Pa.s) and G' (in Pa) as a function of frequency, (in Hz) for the silicone of the invention fully cured at 12.6 min (A), control silicone fully cured at 23.0 min (C-1), control silicone partially cured at 12.6 min (C-2) and for both uncured elastomers (UNC), as disclosed in Example 4.

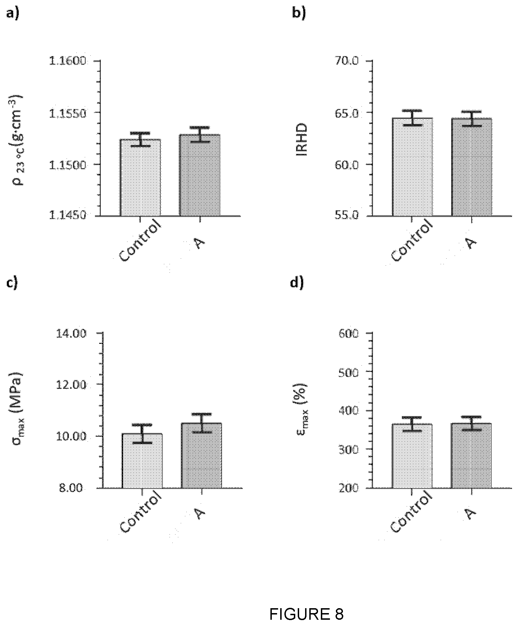

Figure 8 shows average mechanical properties of post-cured silicone rubber as function of the Pt catalyst used for the curing (Invention and commercial one), as disclosed in Example 5: a) density at 23 °C (ρ_{23∘C}, in g/cm³) b) hardness (IRHD scale), c) ultimate tensile strength (σₘₐₓ, in MPa) and d) elongation at break (εₘₐₓ, in %). Error bars indicate mean 99 % confidence interval (CI).

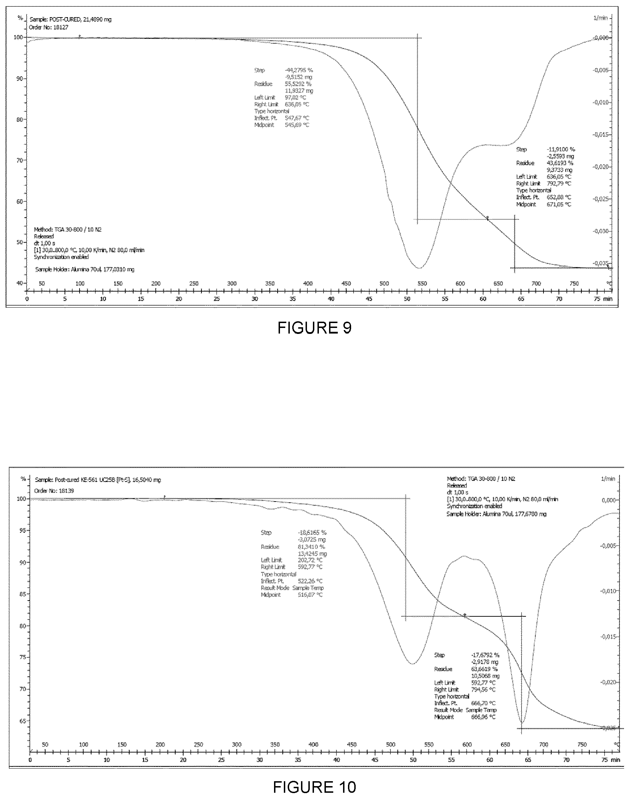

Figures 9 and 10 show the thermogravimetric analysis (TGA) curves of a control silicone rubber and a silicone rubber according of the invention, respectively, as disclosed in Example 6. The weight loss of the samples was registered as a function of temperature, in the range from 30 °C up to 800 °C, and the analysis was conducted under nitrogen atmosphere.

### Detailed description of the invention

The object of the present invention is a complex of platinum, Pt (0), with the ligands 1,3-divinyl-1,1,3,3-tetramethyldisiloxane and diallyl sulphide.

The authors of the present invention found that, surprisingly, the new platinum complex comprising the diallyl sulphide ligand can be advantageously used as hydrosilylation catalyst, as it shows good performance in the catalysis of hydrosilylation reactions, it does form not platinum metal colloids, has excellent shelf-life and provides high quality cured silicone rubber.

Along the present description, as well as in the claims, singular expressions, generally preceded by the articles "a", "an" or "the", are intended to include the plural forms as well, unless the context clearly indicates otherwise.

The terms "about" or "approximately" referred to amounts, as used herein, are meant to include the exact amount and also a certain deviation around the stated amount, namely of ±5%.

Unless otherwise indicated, the stated percentages are always weight percentages (wt%).

The numerical ranges disclosed herein are meant to include any number falling within the ranges and also the lower and upper limits.

### Complex

The complex of the present invention is an organoplatinum compound, containing the 1,3-divinyl-1,1,3,3-tetramethyldisiloxane ligand (also known as 1,3-divinyltetramethyldisiloxane or as 1,1,3,3-tetramethyl-1,3-divinyldisiloxane, CAS number 2627-95-4), which may be abbreviated as dvtms along the present description, and the diallyl sulphide ligand (CH₂=CHCH₂-S-CH₂CH=CH₂, CAS 592-99-1), which may be abbreviated along the present description as C₃H₅SC₃H₅, or as (C₃H₅)₂S or as DAS. Both ligands are coordinated with platinum metal, which is at zero oxidation state, Pt (0). Along the present description, as well as in the claims, the catalyst of the present invention will be represented as [Pt (dvtms) (DAS)] or as [Pt (dvtms) (C₃H₅SC₃H₅)]. As the ratio Pt:DAS:dvtms in the catalyst is typically 2:1:2, alternatively, it can be also represented herein as [Pt₂ (dvtms)₂ (DAS)] or as [Pt₂ (dvtms)₂ (C₃H₅SC₃H₅)], for example, to show the specific composition of the catalyst.

The complex of the present invention may also be represented with the following formula:

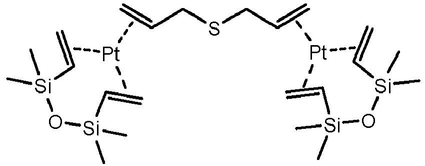

Another aspect of the invention is a process for the preparation of the complex.

The complex can be prepared, for example, by reacting the Pt (0)-1,3-divinyl-1,1,3,3-tetramethyldisiloxane complex of formula [Pt₂(dvtms)₃] (Karstedt's complex) with diallyl sulphide, typically, using a stoichiometric amount of diallyl sulphide. Thus, typically, one mole of the Karstedt's complex reacts with one mole of diallyl sulphide to obtain one mole of the new complex of the invention. The reaction can be represented as follows:

[Pt₂ (dvtms)₃] + C₃H₅SC₃H₅ → [Pt₂ (dvtms)₂ (C₃H₅SC₃H₅)] + dvtms

Typically, the [Pt₂ (dvtms)₃] (Karstedt's complex) starting material is in a solution in a suitable solvent. Suitable solvents are, for example, vinyl terminated polydimethylsiloxane, 1,3-divinyl-1,1,3,3-tetramethyldisiloxane (dvtms), decamethylcyclopentasiloxane, tetravinyltetramethylcyclotetrasiloxane, xylene, or mixtures thereof. A preferred solvent is dvtms, optionally mixed with isopropyl alcohol.

Typically, the reaction is carried out under inert atmosphere, preferably under argon flow, and also preferably protected from light. The reaction is typically carried out at a temperature comprised between 25 °C and 60 °C, preferably comprised between 25 °C and 50 °C, and more preferably comprised between 30 °C and 40 °C. In one embodiment of the invention, the reaction is carried out at about 35 °C. The duration of the reaction may range from about 5 hours to about 24 hours, preferably from 10 to 20 hours.

The starting Karstedt's complex ([Pt₂ (dvtms)₃]) may be obtained from several commercial sources, or may be prepared *in situ,* typically, by reaction of chloroplatinic acid (H₂PtCl₆) with vinyl-silicon containing compounds, in particular, with 1,3-divinyl-1,1,3,3-tetramethyldisiloxane, usually in the presence of sodium bicarbonate, for example, as disclosed in the one-pot methodology reported by Dierick et al., Chem. Eur. J., 2015, 21, 17073 - 17078.

Typically, said reaction of chloroplatinic acid with 1,3-divinyl-1,1,3,3-tetramethyldisiloxane is performed in a solvent which may be selected from isopropanol and ethanol, and preferably is isopropanol.

Typically, in said reaction about 8 moles of dvtms and about 8 moles of sodium bicarbonate are used per mole of chloroplatinic acid.

When Karstedt's starting material is prepared *in situ,* as disclosed above, typically about 0.5 moles of diallyl sulphide per each mole of chloroplatinic acid starting material is used.

Preferably, the whole process, i.e., both the preparation of the Karstedt's catalyst and the reaction with diallyl sulphide, are carried out under inert atmosphere, for example, under argon atmosphere, and also preferably protected from light.

Typically, after step completing the preparation process, any residual solvent, other than dvtms, is evaporated and the catalyst is obtained as a solution in dvtms.

Therefore, when the Karstedt's complex starting material is prepared *in situ* from chloroplatinic acid, the process for preparing the complex of the invention comprises the following steps:
(a) reacting chloroplatinic acid with 1,1,3,3-tetramethyl-1,3-divinyldisiloxane and with sodium bicarbonate and
(b) reacting the product obtained in step (a) with diallyl sulphide.

Another aspect of the invention is the complex obtainable by the process described herein.

### Silicone compositions

The Pt complex of the invention is suitable for catalysing hydrosilylation reactions and, in particular, as catalyst for curing a silicone material.

The terms curing, cross-linking, or vulcanising may be used interchangeably herein, as synonyms, and relate to the hydrosilylation reaction which takes place in a silicone material, in particular, between a silicone base compound which is an alkenyl-containing diorganopolysiloxane and an addition (hydrosilylation) curing agent which is typically a silicon hydride, or organohydrogenpolysiloxane (cross-linker), i.e., a Si-H functionalized polysiloxane. Hydrosilylation reaction is well-known in the art, for example, as reviewed in the book of J. Matisons and B. Marciniec, *op. cit.*

Curing by means of a hydrosilylation reaction is also known as curing by addition.

Therefore, another aspect of the invention is the use of the complex of the invention as catalyst for hydrosilylation reactions.

One particular aspect of the invention is the use of the complex of the invention for curing a silicone material.

A silicone material, also known as polysiloxane, as is well-known in the art, is a polymer made of siloxane units, having a backbone chain which can be schematically represented as R-[Si-O-Si]ₙ-R', wherein each silicon atom additionally has attached two organic groups, commonly two methyl groups (polydimethylsiloxane), wherein R and R' represent additional organic terminal groups.

The silicone material to be cured is functionalized and comprises a mixture of an alkenyl-containing diorganopolysiloxane, which typically comprises at least two alkenyl groups, which are preferably vinyl groups, attached to the silicon atoms, and an organohydrogenpolysiloxane cross-linker, which typically comprises at least two Si-H residues within the silicone backbone.

The alkenyl-containing diorganopolysiloxane may be, typically, a vinyl-functionalized polysiloxane, for example, a vinyl-functionalized polydimethylsiloxane, for example, a vinyl-terminated polydimethylsiloxane.

The organohydrogenpoysiloxane cross-linker, or silicon hydride, is typically a polymethylhydrogensiloxane, for example, comprising alternating -SiMe₂- and - Si(H)(Me)- units within the silicone backbone. Typically, the amount of cross-linker used is such as to provide from about 0.5 moles to about 5 moles of Si-H groups per mole of alkenyl groups in the alkenyl-containing organopolysiloxane.

Typically, the amount of catalyst used is such as to provide from about 0.1 ppm to about 10000 ppm of Pt metal based on the weight of the alkenyl-containing organopolysiloxane.

The curing process generally is activated by heat. The silicone material to be cured may be available in two parts, i.e., one comprising the alkenyl-containing polysiloxane, generally mixed with the catalyst, and one containing the cross-linker, which are combined shortly before being cured. Additionally, or alternatively, both parts may be mixed with the catalyst and available in uncured stable form for a sufficient time, before the curing process is triggered, typically by heat activation.

Another aspect of the invention is a silicone composition comprising a silicone material and the complex of the invention. The silicone composition is meant to be uncured silicone, i.e., not cross-linked. The silicone material is typically an alkenyl-containing polysiloxane as described above, optionally mixed with a cross-linker, such as an organohydrogenpolysiloxane.

The amount of the complex of the invention in the silicone composition is typically comprised between 0.1 ppm to about 10000 ppm, expressed as Pt metal relative to the total weight of the silicone composition.

As shown in the stability studies of Example 2 (Figures 2 and 3), a vinyl-terminated polydimethylsiloxane silicone mixed with the complex of the invention is stable at least during 2 months at room temperature, as shown by the lack of yellowing of the silicone, which means that no Pt metal colloids are formed. Conversely, comparative silicones compounded with Karstedt's catalyst need to be mixed with excess of an inhibitor to avoid reductive deactivation of the catalyst.

### Curing of silicone compositions with the complex of the invention

Another aspect of the invention is a process for curing a silicone composition comprising a silicone material and the complex of the invention.

The curing or cross-linking process leads to the formation of a network structure and typically the liquid silicone mixture turns into a solid cross-linked elastomer. The cured product is referred to herein as silicone rubber or silicone elastomer.

Suitable curing conditions are typically, a temperature comprised between 120 and 175 °C, for a period of time comprised between 5 and 30 minutes, preferably comprised between 10 and 15 minutes, preferably under a pressure of approximately 40 MPa.

Optionally, the curing process may be followed by secondary curing (post-curing) which is performed by a second heating step at high temperature for several hours. The time and temperature can vary but typically is about 4 hours at about 200 °C. Generally, in post-curing secondary reactions may take place, for example involving the cross-linker and moisture or oxygen.

In Example 3, a dynamic multi-heating DSC method was used to study the kinetics of the curing process of the silicone material with the complex of the invention, compared with a silicone material cured with commercial Karstedt's catalyst (control).

Comparing the DSC thermograms (Figure 4: control and Figure 5: silicone of the invention) it can be observed that the width of the exotherm for the curing process of the silicone material of the invention is reduced compared to control group, especially at the lowest heating rate (I: 5°C/min), showing a higher curing rate for the silicone material of the invention, compared to the commercial product.

Furthermore, the results of time-sweep kinetic rheological study disclosed in Example 4 (Figure 6, Table 4) show that the use of the complex of the invention leads to higher curing rates, compared to control material, though the number of crosslinks formed may be analogous since both G' (storage modulus) and G" (loss modulus) reach an equilibrium value which is of the same order of magnitude for both samples (as shown in Figure 6 for control sample (triangles) and for the sample of the invention (squares).

Furthermore, a frequency-sweep rheological study was also performed (Example 4) comparing the silicone of the invention and a comparative silicone. In Figure 7 it can be observed that the curing process leads an upward shift of G' and complex viscosity (η*) crossover point. Said change is due to the molecular weight increase during the curing process, since molecular weight is the main structural parameter of polymer's flow behaviour at temperatures above the glass transition temperature.

The results of this test, as shown in Figure 7, show that fully cured control material (C-1) had higher modulus values at low frequency than partially cured control material (quenched after 12.6 min of heat curing, C-2) and also higher than uncross-linked silicone material (UNC) (Figure 7a). Moreover, the difference in the complex viscosity values between cured sample of the invention (A) and partially cured control sample (C-2) (Figure 7b) confirmed that when the complex of the invention is used, cross-linking reaction is completed at significantly shorter curing times than when commercial catalyst is used.

### Cured silicone rubber

Another aspect of the invention is a silicone rubber cured with the complex of the invention.

This silicone rubber is obtainable by curing a silicone composition comprising a mixture of the complex of the invention and a curable silicone material, as described above.

The term "cured with the complex of the invention" means that the silicone material mixture is subjected to cross-linking, or hydrosilylation reaction, using the complex of the invention, as disclosed in the previous section.

The cured silicone rubber includes also a silicone rubber exposed to a curing and to a subsequent post-curing process, as disclosed above.

As shown in Example 5 (Table 7), a post-cured silicone rubber obtained using the complex of the invention or using a catalyst according to the prior art had similar mechanical properties, namely, density, hardness, ultimate tensile strength and elongation at break.

It was also found that the elastic properties of the silicone elastomer cured with the complex of the invention can better withstand harsh heat conditions than silicone cured with a catalyst of the prior art, as shown in some dynamic mechanical analysis tests performed.

The thermo stability of post-cured silicone rubber samples was also studied by thermogravimetric analysis (TGA), as disclosed in Example 6 (Figures 9 and 10 for the silicone of the invention and control, respectively).

The TGA thermograms shown in Figures 9 and 10 show that the silicone elastomer samples undergo two-step thermal depolymerisation. Higher amount of undegraded polymer residue is obtained with the sample of the invention compared to the control. Moreover, the weight loss in the first thermal depolymerisation stage is clearly lower for the silicone for the invention compared to the commercial elastomer.

Hence, when the complex of the invention is used for catalysing the curing process, the obtained silicone rubber shows a better resilience towards thermal degradation when compared to a silicone rubber cured with a commercial Pt catalyst, according to the prior art.

The complex of the invention can be used for preparing cured silicones by injection moulding, as is well known in the art (see for example V. Goodship, Practical Guide to Injection Moulding, Rapra Technology Limited and ARBURG Limited, 2004), The cured silicone rubber obtained therewith may have applications in many fields, for example, in the electrical and automotive industries, machine construction, medical technology, food, beverage and biopharmaceutical manufacturing downstream processes. Some few examples are keyboard covers, seals, plug connectors, short-term implants and many more, as is well-known in the art.

Other well-known applications of cured silicone rubber are flexible silicone hose and ducting for conveying liquid, semi-liquid and even solid stuff at high temperatures or low pressures.

### Examples

### Example 1.- Preparation of the complex of the invention

The base [Pt₂(dvtms)₃] complex in polydimethylsiloxane oil form was synthetized starting from 1.00 g of H₂PtCl₆·, which was introduced in a round bottomed flask under Ar stream, which was immediately sealed afterwards with a septum for weighting. Thereafter, anhydrous isopropanol (10 ml) was added to the reaction vessel using a syringe which was previously purged with Ar. The orange mixture was stirred at 70 °C for 30 min and then cooled down to room temperature. Sodium bicarbonate (8 eq.) was added to the reaction vessel and the evolved CO₂ was vacuumed removed. Finally, 1,3-divynil-1,1,3,3-tetramethyldisiloxane (dvtms) (8 eq.) was added using the purged syringe and the reaction vessel was heated at 70 °C for 60 min. The reduction process of H₂PtCl₆ into [Pt₂(dvtms)₃] was conducted under Ar atmosphere. After confirming the completion of the reaction by TLC, the crude was cooled down to room temperature, poured, and vacuum filtered through a plug of silica gel/Celite^{®}R566/MgSO₄ (v/v/v 1:1:1) under Ar stream.

The filtered isopropylic [Pt₂(dvtms)₃] complex solution was collected in 5 ml of dvtms and was used to synthetize the novel complex of the invention by adding diallyl sulphide (156 µl, 1.24 mmol 97% purity, Sigma Aldrich) under Ar stream. Then, the pale-yellow solution obtained was stirred at 35 °C for twelve hours under constant Ar flow and protected from light.

The follow up the reaction was carried out by thin layer chromatography on Merck Millipore F254 silica gel plates (200 µm thickness, polyester supported) drawn up in dichloromethane-cyclohexane mixture (v/v 1:2). The spots were visualized by projecting ultra-violet light (254 nm) onto the sheet.

In vacuo evaporation of residual solvent from the obtained orange-yellow suspension led to the new catalyst [Pt (dvtms) (DAS)] as bright yellow solution in dvtms.

The new complex was characterised by nuclear magnetic resonance (NMR) spectroscopy.

¹H-decoupled ¹⁹⁵Pt spectra was recorded at 25 °C on a Bruker Avance III NMR spectrometer equipped with CryoProbe Prodigy (85.62 MHz).

In addition, ¹H-NMR were determined in a Varian 400-NMR spectrometer operating in a field strength of 400 MHz. For performing this analysis, residual silicone oil was removed by ultrasonic-assisted extraction in pentane, and an orange-yellow solid product was isolated.

Chemical shifts are reported in part per million (ppm) on the δ scale and are either referenced to residual signal of the solvent CDCl₃ for ¹H-NMR spectra and externally referenced to K₂PtCl₄ in d₆-DMSO (δ_{Pt} = -1610 ppm) in the case of ¹⁹⁵Pt-NMR spectra.
¹H-NMR (CDCl₃): δ 5.5-5.0 (m, Si-CH=CH₂ from dvtms matrix), 4.3-3.5 (m, S-CH=CH₂), 2.5-1.9 (m, Si-CH=CH₂), 0.15 (s, Si-Me_{eq}), 0.06 (s, Si-Meₐₓ).

Figure 1 shows the ¹H-decoupled ¹⁹⁵Pt NMR spectra the complex of the invention in CDCl₃. It can be observed that the ¹⁹⁵Pt-NMR displays only one Pt signal with a chemical shift of -4616 ppm. This chemical shift is indicative of a Pt(0) complex and is clearly different from the one described for [Pt₂(dvtms)₃] (δ_{Pt} = -6164 ppm) (see for example Warhurst, N. J. W., Aspects of Some Divinylsiloxane Complexes of Platinum and Rhodium., Ph.D. Thesis, University of Sussex, 1990) and thus, provides evidence that the new Pt complex has been obtained after adding diallyl sulphide to Karstedt's catalyst solution.

### Example 2.- Stability studies

The obtained catalyst was mixed with a silicone base gum. To this end, the solution in dvtms obtained in Example 1 was added dropwise to a dimethylsiloxane methylvinyl gum (BlueSil^{™} 753, Elken silicones) in an open two-roll rubber mixing mill, so that the Pt content in the compounded silicone paste was approximately of 0.1 wt%.

The quantification of Pt content in the silicone paste was performed using a Perkin Elmer Optima 2100V inductively coupled plasma atomic emission spectrometer (ICP-AES).

The formation of platinum colloids was assessed by measuring the yellowing of a silicone gum compounded with the complex of the invention both a short and long term, using the APHA-HAZEN colour scale also known Platinum Cobalt (Pt/Co) scale. More specifically, a first assay was conducted to evaluate the deactivation of the catalyst during its usage for two months, whereas a second one was conducted to evaluate its long-term stability after one year of storage, during the two following months. Both assays were performed by weighting around 0.05 g of silicone paste in a 75 mm length test tube which was then introduced into a 180 mm length Nessler tube. So that, APHA-HAZEN colour changes from such a more consistency Pt catalyst silicone dispersion could be measured without light reflecting problems.

The following compounded silicone gums were compared in the different tests:

**TABLE 1**

| | |
|---|---|
| Example 1 (A) | Silicone paste compounded with the complex of the invention, as disclosed in Example 1, with Pt content of 0.1 wt% |
| Comparative 1 (C1) | Karstedt's catalyst solution in dvtms with Pt content of 12.5 mg·l⁻¹. |
| Comparative 2 (C2) | Silicone paste compounded with Karstedt's catalyst stabilized with excess of propyl sulphide (17-fold excess), with Pt content of 0.1 wt% |
| Comparative 3 (C3) | Karstedt's catalyst solution in dvtms stabilized with excess of propyl sulphide (8-fold excess), with Pt content of 12.5 mg·l⁻¹. |
| Comparative 4 (C4) | Karstedt's catalyst solution in dvtms stabilized with excess of propyl sulphide (4-fold excess), with Pt content of 12.5 mg·l⁻¹. |

The comparative products were prepared as follows:
C1 was prepared by accurately measuring 11 µl of base [Pt₂(dvtms)₃] complex in polydimethylsiloxane oil and broad to 40 ml with dvtms into a volumetric Nessler tube.
C2 was prepared from base [Pt₂(dvtms)₃] complex in polydimethylsiloxane oil, in which propyl sulphide (5.3 ml, 38.5 mmol, 97% purity, Sigma Aldrich) was added after being vacuumed removed solvent excess under inert atmosphere. Finally, the obtained Pr₂S/Pt mixture was dropwise compounded with dimethylsiloxane methylvinyl gum in an open two-roll rubber mixing mill, so that the Pt content in the compounded silicone paste C2, was approximately of 0.1 wt%.

Comparative examples 3, and 4 were prepared by accurately measuring 280 and 140 µl of propyl sulphide (Pr₂S), respectively and added to 1 ml aliquot of base [Pt₂(dvtms)₃] complex in polydimethylsiloxane oil as prepared in Example 1. Then sample tests C3 and C4 were prepared by accurately measuring 11 µl from each of Pr₂S/Pt mixtures and broad to 40 ml with dvtms into a volumetric Nessler tube.

Figure 2 shows the results of a stability test for the composition of Example 1 and comparative compositions C1, C2, C3 and C4 for a period of 2 months at room temperature. Ordinates show the result of the assay at each time point expressed as the value of the APHA-HAZEN colour scale and abscissa show the time elapsed. It can be observed that there was no significant change in the colour over the first two months of exposition to air at room temperature with the complex of the invention (A), meaning that no Pt metal colloids were formed. Conversely, Karstedt's catalyst (C1) underwent colloid formation, and 2 months of shelf-life stability could only be achieved by adding at least 17-fold excess of dipropyl sulphide stabilizer (C2).

Figure 3 shows the results of a comparative long term stability test of products A and C2 during a period of 2 months at room temperature (represented in the figure as the period II, pot-life) after being stored at 8 °C for a year (represented in the figure as the period I, shelf-life). Ordinates show the value of the APHA-HAZEN colour scale and abscissa show the time elapsed. It can be observed that the silicone compounded with the complex of the invention (A) exceeds 1 year of shelf-life, while metal colloids are formed in Karstedt's catalyst, and 10-fold excess of stabilizer is needed to achieve similar stability (C2). Furthermore, when products A and C2 are compared, the study also denotes that A leads to slightly better pot-life results than C2 at long term.

### Example 3.- Curing process: Differential scanning calorimetry study

Dynamic multi-heating DSC method was used to study the kinetics of the curing process for the silicone material with the complex of the invention, compared to a commercial stabilized Karstedt's catalyst.

Differential scanning calorimetry measurements (DSC) were run in a Metter Toledo DSC822e differential scanning calorimeter.

The silicone material to be cured was heated from 30 °C to 300 °C, at heating rates of 2.5, 5 and 10 °C/min in nitrogen gas. The samples used were of about 25 mg each.

The following samples were prepared for the present DSC analysis:
- vinyl-terminated polydimethethysiloxane (100 parts per hundred rubber, phr), cross-linker (2 phr), platinum catalyst of example 1 (0.5 phr) (Invention, A)
- vinyl-terminated polydimethethysiloxane (100 phr), cross-linker (2 phr), commercial Karstedt's catalyst (0.5 phr) (Control, C)

The DSC curing thermograms of the control silicone and of the silicone of the invention are shown in figures 4 and 5, respectively, at heating rates of 2.0 °C min⁻¹ (I), 5 °C min⁻¹ (II) and 10 °C min⁻¹ (III). The abscissa shows the temperatures and the ordinate show the heat flow (in watts) per unit of mass (in grams) (W/g).

The control silicone showed exotherms at about 105.3 °C, 114.9 °C and 122.8 °C and the silicone of the invention showed exotherms at about 103.1 °C, 111.7 °C and 120.8 °C. It was observed that the width of the exotherms for the curing process of the silicone material of the invention was narrower than in the control group, especially at the lowest heating rate (I: 5 °C/min), showing a higher curing rate for the silicone material of the invention, compared to the commercial product.

Table 2 shows the average values of the curing temperature (peak temperature, Tp), and of the heat of reaction (ΔH_{R}) for both silicones and for each heating rate. The table also shows activation energy (Ea), which was calculated using the Kissinger method, as is well known in the art (see for example: Vyazovkin S., Molecules, 2020, 25, 2813; and Wellen et al., Polym. Test., 2014,40, 33-38.).

**TABLE 2**

| Silicone | Heating rate (°C/min) | Tp (°C) | ΔH_{R} (J/g) | ΔH_{R,} average (J/g) | Ea (KJ/mol) |
|---|---|---|---|---|---|
| Control | 2 | 105.26 | 2.531 | 2.577 | 107.8 |
| | 5 | 114.91 | 2.616 | | |
| | 10 | 122.83 | 2.585 | | |
| Invention | 2 | 103.08 | 2.578 | 2.608 | 105.3 |
| | 5 | 111.71 | 2.651 | | |
| | 10 | 120.83 | 2.594 | | |

It can be observed that the values for the average heat of reaction and energy of activation are similar for the silicone cured with the Pt complex of the invention, compared to the control.

### Example 4.- Curing process: rheological study

Circular specimens from silicone material of the invention and control comparative silicone of 1 mm thick and 16.2 mm diameter were cut for this analysis. Rheological measurements were performed using a rotational rheometer AR2000ex model (TA instruments) equipped with a 20 mm sized cross-hatched plate geometry.

Prior to conduct rheology measurements, the linear viscoelastic region (LVR) from uncross-linked sample was determined. A strain sweep from 0.1 to 20 % at a frequency of 1 Hz was performed at 25 °C. Prior to strain sweep, the circular sample specimen was kept at that constant temperature for 1 min to equilibrate. Silicone material was found to be in the LVR within strains ranging from 0.1 to 0.5%, and 0.2% was fixed as the strain amplitude for the dynamic rheological measurements.

The silicone materials compared were the same as disclosed in Example 3.

The test methods carried out were time sweep and frequency sweep.

### Time-sweep kinetic rheological study

A time-sweep in the LVR was performed to monitor the curing behaviour of the silicone materials with time. Samples were placed on the rheometer at 50 °C in order to avoid premature curing and rheological measures were performed per duplicate.

The conditions of the experiment were set as shown in Table 3:

**TABLE 3**

| | |
|---|---|
| Run time | 30 min |
| Curing temperature | 120 °C |
| Thermal equilibration | 1 min |
| Frequency (ω) | Single frequency, 1.0 Hz |
| Measuring gap | 0.5 mm |

G' (storage modulus) and G" (viscous modulus) were recorded as a function of time. Results obtained are shown in Figure 6, showing the shear moduli (in Pa) as a function of time (in minutes) for control silicone (C, triangles) and the silicone of the invention (A, squares). TC is the average time at which G' reaches the 90% of its maximum value. These rheological curing curves show that storage modulus increases as the material hardens and gains elasticity over the curing process, until it finally reaches an equilibrium value. When it reaches the plateau, addition curing is concluded.

The main results obtained in this assay are also shown in Table 4, wherein G'_{L} and G'_{H} are the lowest and highest average values of the storage modulus and G"_{L} and G"_{H} are the lowest and highest average values of the loss modulus:

**TABLE 4**

| Silicone | G"_{L} (Pa) | G"_{H} (Pa) | G'_{L} (Pa) | G'_{H} (Pa) | TC (min) |
|---|---|---|---|---|---|
| Control | 2.51·10⁴ | 1.27·10⁴ | 5.67·10⁴ | 2.57·10⁵ | 23.0 |
| Invention | 2.39·10⁴ | 7.30·10³ | 6.30·10⁴ | 2.69·10⁵ | 12.6 |

The results of TC show that using the complex of the invention instead of Karstedt's catalyst results in higher curing rates, though the number of crosslinks formed may be analogous since moduli G' reach an equilibrium value which is of the same order of magnitude for both samples.

Significant differences have been also observed when monitoring the viscous modulus evolution during curing. More specifically, results obtained for G" seem to indicate that, in the cure reaction, a more pronounced sudden immobilization of some polymer chains takes place when using the complex of the invention compared with the control formulation.

### Frequency-sweep rheological study

The samples were subjected to a frequency-sweep in the LVR in order to study the molecular structuration obtained in the curing process when the complex of the invention is used compared to a catalyst according to the prior art.

The settings used are shown in Table 5.

**TABLE 5**

| | |
|---|---|
| Temperature | 25 °C |
| Thermal equilibration | 1 min |
| Frequency (ω) | Oscillatory, from 0.01 Hz to 100 Hz (10 points per decade) |
| Measuring gap | Fixed at 0.5 mm |

Both addition curable systems were heated to 120 °C under constant shear rate (1 Hz) at concerted reaction times (Table 6):

**TABLE 6**

| Silicone | Sample | Heating time (minutes) |
|---|---|---|
| Control | C-1 | 23.0 |
| | C-2 | 12.6 |
| | UNC | 0.0 |
| Invention | A | 12.6 |
| | UNC | 0.0 |

In the case of the silicone cured with the commercial catalyst (control), the sample taken at 12.6 minutes (C-2) was cold quenched in order to stop further reaction. Once the silicone materials were stabilized at room temperature, complex viscosity (η*) and G' were both recorded in the range of 0.01 to 100 Hz. As reference, uncrosslinked silicone materials were also assayed (UNC).

The changes of the complex viscosity (|η*|, in Pa.s) and G' as a function of frequency are shown in Figures 7a-b, for the silicone of the invention fully cured at 12.6 min (A), control silicone fully cured at 23.0 min (C-1), control silicone partially cured at 12.6 (C-2) and for both uncured elastomers (UNC).

It can be observed that fully cured control material (C-1) had higher viscosity at low frequency than partially cured control material (quenched after 12.6 min of heat curing, C-2) and also higher than uncross-linked silicone material (UNC) (Figure 7a). Moreover, the difference in the complex viscosity values between cured sample of the invention (A) and partially cured control sample (C-2) (Figure 7b) confirmed that when the complex of the invention is used, cross-linking reaction is completed at significantly shorter curing times than when commercial catalyst is used.

### Example 5.- Mechanical properties of cured silicone rubber

The mechanical properties of the silicone rubber cured with the platinum complex of the invention were compared to those of a silicone rubber cured with a commercial catalyst.

For preparing the cured silicone according to the invention (A), 100 parts by weight of a silicone rubber base, which was a commercially available alkenyl-containing dimethylpolysiloxane, was mixed with 2 parts by weight of a commercially available methylhydrogenpolysiloxane cross-linker and with 0.5 parts per weight of the complex of the invention in the VMQ silicone paste form, as obtained in Example 2, using a two-roll rubber mixing mill.

For preparing the comparative cured silicone with a commercial catalyst (control), 100 parts by weight of a silicone rubber base, which was a commercially available alkenyl-containing dimethylpolysiloxane, was mixed with 2 parts by weight of a commercially available methylhydrogenpolysiloxane cross-linker and with 0.5 parts per weight of a commercial stabilized Karstedt's platinum catalyst using a two-roll rubber mixing mill.

The silicones were cured by heating the blend at 120 °C for 10 minutes under a pressure of approximately 40 MPa.

Once cured, the silicone was also subjected to a post-curing process, at a temperature of 200 °C for 4 hours, and allowed to temperate at room temperature for at least one full day prior perform any measurement.

The following properties of cured and post-cured silicones were measured:
- Density (at 23 °C, ρ_{23°C}, g/cm³)
- Hardness, in the International Rubber Hardness Degree (IRHD) scale
- Ultimate tensile strength (σₘₐₓ, MPa)
- Elongation at break (εₘₐₓ, %)

Ten dumb-bell shape SDMK 1000 specimens per silicone rubber sample were used for the measurements. Prior to analysis, the specimens were rinsed twice with Milli-Q water, dried, individually labelled and stored in sealed polyethylene bags.

Density was measured using the test method A described in ASTM D792-13 standard. A Micro IRHD digital electronic durometer (Hildebrand-GmbH) was used to perform micro-International Hardness Degree (IRHD) measurements according to ISO 48. Finally, both tensile strength and elongation at break were measured on 5 kN Zwick/Roell Z005 universal testing machine at room temperature in displacement control at a traction rate of 500 mm·min⁻¹.

The mean values for each property are displayed in Table 7 for the post-cured silicone rubber:

**TABLE 7**

| Properties | Invention (A) | Control |
|---|---|---|
| | Post-cured | Post-cured |
| ρ_{23°C} (g/cm³) | 1.1529 | 1.1524 |
| IRHD | 64.4 | 64.5 |
| σₘₐₓ (MPa) | 10.51 | 10.10 |
| εₘₐₓ (%) | 367 | 365 |

No significant differences were observed between the silicone rubber cured with the platinum complex of the invention (A) and the silicone cured with a commercial catalyst (control) as shown the error bars from either ρ₂₃∘_{C}, IRHD, σₘₐₓ or εₘₐₓ mean values as it is illustrated in the Figure 8.

### Example 6.- Thermogravimetric analysis of cured silicone rubber

The thermo stability of post-cured silicone rubber samples was examined by non-isothermal thermogravimetric analysis (TGA), using a thermogravimetric analyser model TG30 from Mettler-Toledo.

The experiment consisted in registering the weight loss of a sample (of approximately 20 mg) as a function of temperature from 30 °C up to 800 °C. The temperature increase was set to 10 °C·min⁻¹, and the analysis was conducted under nitrogen atmosphere with a gas flow of 80 ml·min⁻¹.

The summary of the TGA results is shown in Table 8, wherein Tmax is the temperature at a maximum in mass loss rate:

**TABLE 8**

| Sample | Tmax₁ (°C) | Wt loss₁ (%) | Tmax₂ (°C) | Wt loss₂ (%) | Residue at 800 °C (wt%) |
|---|---|---|---|---|---|
| Control | 547.67 | -44.28 | 652.88 | -11.91 | 43.62 |
| Invention | 522.26 | -18.62 | 666.70 | -17.68 | 63.66 |

The TGA curves are shown in Figures 9 (control) and 10 (invention).

It can be observed that both elastomers undergo two-step thermal depolymerisation. However, the sample of invention exhibit a higher ceramization capability than the one of control, as indicated by the higher values of residual mass yield (63.66 wt% vs. 43.62 wt%). In particular, the weight loss in the first stage was clearly lower for the silicone of the invention compared to the commercial elastomer (18.62 wt% of weight loss vs. 44.25 wt%).

## Claims

1. Complex of platinum, Pt (0), with the ligands 1,3-divinyl-1,1,3,3-tetramethyldisiloxane and diallyl sulphide.

2. Complex according to claim 1, **characterised in that** it has the following formula:

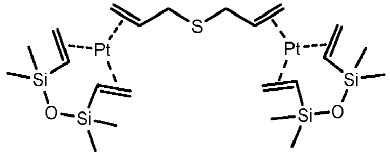

3. Process for the preparation of the complex of claims 1 or 2, **characterised in that** it comprises reacting the Pt (0)-1,3-divinyl-1,1,3,3-tetramethyldisiloxane complex of formula [Pt₂(dvtms)₃] (Karstedt's complex) with diallyl sulphide.

4. Process according to claim 3, **characterised in that** one mole of the Karstedt's complex reacts with one mole of diallyl sulphide to obtain one mole of the complex.

5. Process according to claims 3 or 4, **characterised in that** the reaction is carried out in solution, wherein the solvent is selected from 1,3-divinyl-1,1,3,3-tetramethyldisiloxane, vinyl terminated polydimethylsiloxane, decamethylcyclopentasiloxane, tetravinyltetramethylcyclotetrasiloxane, xylene, and mixtures thereof, and preferably is 1,3-divinyl-1,1,3,3-tetramethyldisiloxane.

6. Process according to any one of claims 3 to 5, **characterised in that** the reaction is carried out at a temperature comprised between 25 °C and 60 °C, preferably under inert atmosphere.

7. Process according to any one of claims 3 to 6, **characterised in that** the Karstedt's complex starting material is prepared *in situ* by reaction of chloroplatinic acid (H₂PtCl₆) with 1,3-divinyl-1,1,3,3-tetramethyldisiloxane, preferably in the presence of sodium bicarbonate.

8. Process according to claim 7, **characterised in that** the preparation of Karstedt's complex starting material is carried out in a solvent selected from isopropanol and ethanol, and preferably the solvent is isopropanol.

9. Process according to claims 7 or 8, **characterised in that** the preparation of Karstedt's complex is carried out under inert atmosphere, preferably under argon atmosphere.

10. Use of the complex of claims 1 to 2 as catalyst for hydrosilylation reactions.

11. Use according to claim 10, **characterised in that** the hydrosilylation reaction is for curing a silicone material.

12. Silicone composition comprising a silicone material and the complex according to claims 1 or 2.

13. Silicone composition according to claim 12, **characterised in that** the silicone material comprises an alkenyl-containing polysiloxane and, optionally, an organohydrogenpolysiloxane cross-linker.

14. Silicone composition according to claims 12 or 13, **characterised in that** the amount of the catalyst is comprised between 0.1 ppm to about 10000 ppm, expressed as platinum metal relative to the total weight of the silicone composition.

15. Process for curing the silicone composition of any one of the claims 12 to 14, **characterized in that** it comprises heating said composition to a temperature comprised between 120 and 175 °C for a period of time comprised between 5 and 30 minutes.

16. Silicone rubber obtainable by the process of claim 15.
